# EUROPEAN PATENT SPECIFICATION

(11) **EP 3 153 546 B1**
(45) Date of publication and mention of the grant of the patent: **13.07.2022**
(21) Application number: 16201678.6
(22) Date of filing: 29.08.2012
(51) Int. Cl.: C08L 33/04, C08L 63/08, C08L 77/06, C09D 133/04, C09D 163/08, C09D 177/06, C09D 167/00

(54) **COATING COMPOSITIONS FOR FOOD AND BEVERAGE CONTAINERS**
BESCHICHTUNGSZUSAMMENSETZUNGEN FÜR NAHRUNGSMITTEL- UND GETRÄNKEBEHÄLTER
COMPOSITIONS DE REVÊTEMENT POUR CONTENEURS À ALIMENTS ET BOISSONS

(30) Priority: 29.08.2011 US 201113219771
(43) Date of publication of application: 12.04.2017
(62) Divisional of application: 12761846.0
(73) Proprietor: PPG Industries Ohio, Inc., Cleveland, OH 44111 (US)
(72) Inventor: MOST, Christopher L., Wilder, KY Kentucky 41071 (US); McVAY, Robert, Cincinnati, OH Ohio 45239 (US)
(74) Representative: f & e patent

(56) References cited:
- US-A- 3 035 000
- US-A- 4 736 010
- US-A1- 2004 132 895
- DATABASE WPI Week 198720 Thomson Scientific, London, GB; AN 1987-139996 XP002687315, & JP 62 079250 A (ACR KK) 11 April 1987 (1987-04-11) -& JP H06 13662 B2 (SUNSTAR ENGINEERING INC; ACR CO LTD; ASAHI DENKA KOGYO KK) 23 February 1994 (1994-02-23)

## Description

### FIELD OF THE INVENTION

The present invention relates to coating compositions that are useful for coating containers of various sorts such as food and beverage containers. The compositions are particularly useful for coating the interior of containers for acidic foods such as tomatoes.

### BACKGROUND OF THE INVENTION

Coatings are typically applied to the interior of metal food and beverage containers to prevent the contents from contacting the metal surface of the container. Contact with certain foods, particularly acidic products, can cause the metal container to corrode. This corrosion results in contamination and deterioration in the appearance and taste of the food or beverage product.

The internal protective coating applied to metal cans is typically one that has low extractibles to avoid contamination of the contents. The coating should also be substantially defect-free, and possess high resistance to a wide variety of foods and beverages. Good adhesion to metal surfaces is also desired, as is good wetting, to ensure complete coverage of the metal and to protect the metal during baking and forming operations. The high temperatures needed to achieve rapid curing speeds, however, often result in blistering of the coating. Blistering typically occurs as cure temperature passes through the boiling point of the diluent and can result in incomplete or weakened coverage of the can interior. After can fabrication, the coating should withstand the relatively stringent temperature and pressure requirements to which cans are subjected during food processing and should provide the necessary level of corrosion resistance to the cans once filled.

US 4 736 010 A relates to an epoxy resin curing composition comprising a curing agent, which is a modified fatty acid amide compound prepared by reacting an epoxidized fatty acid ester, modified with a carboxylcontaining acrylonitrile-butadiene copolymer, with an amide-forming nitrogeneous compound such as a polyamideamine.JP H 0613662 B2 relates to PVC plastisol compositions comprising as essential components a PVC copolymer, a plasticizer, and 0.05 to 10 wt.-% of a tackifier, which can be obtained by reacting at a temperature of 50-200°C a polyamide amine with an epoxidized diene such as epoxidized polybutadiene.

US 2004/132895 A1 relates to compositions for coating food cans comprising polyester and acrylic polymers and optionally further a crosslinker which can include melamine and phenolic crosslinkers.

### SUMMARY OF THE INVENTION

The present invention provides a composition comprising:
(a) a resinous binder comprising a polyester polymer and a curing agent, which is reactive with the polyester polymer,
(b) 5 to 35 percent by weight based on resin solids weight of a product prepared by mixing together and heating:
   (i) an epoxidized polyolefin polymer, and
   (ii) a polyamide,
wherein the polyester polymer is used in an amount of 30 to 90 percent by weight, and the curing agent is used in an amount of 5 to 50 percent by weight, the percentages by weight being based on the weight of total solids in the coating composition.

The present invention also provides a coated article comprising:
(a) a substrate, and
(b) a coating deposited on at least a portion of the substrate from the composition described above.

### DETAILED DESCRIPTION

As used herein, unless otherwise expressly specified, all numbers such as those expressing values, ranges, amounts or percentages may be read as if prefaced by the word "about", even if the term does not expressly appear. Moreover, it should be noted that plural terms and/or phrases encompass their singular equivalents and vice versa. For example, "a" polymer, "a" crosslinker, and any other component refers to one or more of these components.

When referring to any numerical range of values, such ranges are understood to include each and every number and/or fraction between the stated range minimum and maximum.

As employed herein, the term "polyol" or variations thereof refers broadly to a material having an average of two or more hydroxyl groups per molecule. The term "polycarboxylic acid" refers to the acids and functional derivatives thereof, including anhydride derivatives where they exist, and lower alkyl esters having 1-4 carbon atoms.

As used herein, the term "polymer" refers broadly to prepolymers, oligomers and both homopolymers and copolymers. The term "resin" is used interchangeably with "polymer".

The terms "acrylic" and "acrylate" are used interchangeably (unless to do so would alter the intended meaning) and include acrylic acids, anhydrides, and derivatives thereof, such as their C₁-C₅ alkyl esters, lower alkyl-substituted acrylic acids, e.g., C₁-C₂ substituted acrylic acids, such as methacrylic acid, ethacrylic acid, etc., and their C₁-C₅ alkyl esters, unless clearly indicated otherwise. The terms "(meth)acrylic" or "(meth)acrylate" are intended to cover both the acrylic/acrylate and methacrylic/methacrylate forms of the indicated material, e.g., a (meth)acrylate monomer. The term "acrylic polymer" refers to polymers prepared from one or more acrylic monomers.

As used herein, "a" and "the at least one" and "one or more" are used interchangeably. Thus, for example, a coating composition that comprises "a" polymer can be interpreted to mean the coating composition includes "one or more" polymers.

As used herein, the molecular weights are determined by gel permeation chromatography using a polystyrene standard. Unless otherwise indicated, molecular weights are on a number average basis (Mₙ).

The resinous vehicle is preferably a polyester polymer, optionally further including an acrylic polymer. The acrylic polymer is preferably a polymer derived from one or more acrylic monomers. Furthermore, blends of acrylic polymers can be used. Preferred monomers are acrylic acid, methyl acrylate, ethyl acrylate, propyl acrylate, butyl acrylate, penta acrylate, hexyl acrylate, methacrylic acid, methyl methacrylate, ethyl methacrylate, propyl methacrylate, butyl methacrylate, penta methacrylate and hexyl methacrylate. The acrylic polymer may also contain hydroxyl groups which typically are derived from hydroxy-substituted acrylic or methacrylic acid esters. Examples include hydroxyethyl acrylate and hydroxypropyl methacrylate. The weight average molecular weight (M_{w}) of the acrylic polymer component is preferably at least 5,000 g/mole, more preferably from 15,000 to 100,000 Daltons. The acrylic polymer typically has an acid value of 30 to 70, such as 40 to 60 mg KOH/g; a hydroxyl value of 0 to 100, such as 0 to 70 mg of KOH/g and a glass transition temperature (T_{g}) of -20 to +100°C., such as +20 to +70°C.

The polyester polymers are prepared by processes well known in the art comprising the condensation polymerization reaction of one or more polycarboxylic acids with one or more polyols. Examples of suitable polycarboxylic acids are phthalic acid, isophthalic acid, terephthalic acid, 1,4-cyclohexane dicarboxylic acid, succinic acid, sebacic acid, methyltetrahydrophthalic acid, methylhexahydrophthalic acid, tetrahydrophthalic acid, dodecane dioic acid, adipic acid, azelaic acid, naphthylene dicarboxylic acid, pyromellitic acid, dimer fatty acids and/or trimellitic acid.

The polyol component is, for example, selected from diols or triols and preferably from mixtures thereof. Examples of suitable polyols include ethylene glycol, 1,3-propanediol, diethylene glycol, dipropylene glycol, triethylene glycol, 1,4-butanediol, 2-methyl-1,3-propanediol, 1,4-cyclohexane dimethanol, 1,6-hexanediol, neopentyl glycol, trimethylolpropane and glycerol. The polyester polymer preferably has a number average molecular weight between 1000 and 20,000 g/mole.

The polyester polymers typically have an acid value between 0 and 20, such as 0 to 10 mg of KOH/g, a hydroxyl number between 50 to 200, such as 70 to 150 mg of KOH/g, a glass transition temperature (T_{g}) between -20°C. and +50°C., such as -10°C. and +40°C.

One or more curing agents are present in the resinous vehicle, which are reactive with the polyester polymer, and acrylic polymer, if present. Suitable curing agents are phenolplasts or phenol-formaldehyde resins and aminoplast or triazine-formaldehyde resins. The phenol-formaldehyde resins are preferably of the resol type. Examples of suitable phenols are phenol itself, butyl phenol, xylenol and cresol. Cresol-formaldehyde resins, typically etherified with butanol, are often used. For the chemistry in preparation of phenolic resins, reference is made to "The Chemistry and Application of Phenolic Resins or Phenolplasts", Vol. V, Part I, edited by Dr. Oldring; John Wiley & Sons/Cita Technology Limited, London, 1997. Examples of commercially available phenolic resins are PHENODUR^{®} PR285 and BR612 and those resins sold under the trademark BAKELITE^{®}, typically BAKELITE 6581LB.

Examples of aminoplast resins are those which are formed by reacting a triazine such as melamine or benzoguanamine with formaldehyde. Preferably, these condensates are etherified typically with methanol, ethanol, butanol including mixtures thereof. For the chemistry preparation and use of aminoplast resins, see "The Chemistry and Applications of Amino Crosslinking Agents or Aminoplast", Vol. V, Part II, page 21 ff., edited by Dr. Oldring; John Wiley & Sons/Cita Technology Limited, London, 1998. These resins are commercially available under the trademark MAPRENAL^{®} such as MAPRENAL MF980 and under the trademark CYMEL^{®} such as CYMEL 303 and CYMEL 1128, available from Cytec Industries.

The polyester polymer is used in amounts of 30 to 90 percent by weight, such as 40 to 90, preferably 30 to 70 percent by weight, and the crosslinking agent is present in amounts of 5 to 50, preferably 20 to 40 percent by weight, the percentages by weight being based on the weight of total resin solids in the coating composition.

The epoxidized olefin polymer is preferably an epoxidized polybutadiene, epoxidized polyisoprene, or an epoxidized copolymer of a diolefin such as a copolymer with styrene. Epoxidized butadiene polymers, e.g., as described in U.S. Patent No. 3,030,336, are preferred. These epoxidized polybutadienes are characterized by a substantially linear structure having an epoxy oxygen content of 5 to 10 percent by weight; an epoxy equivalent weight of 300 to 3,000, and a hydroxyl group content of 1 to 3 percent by weight.

Besides the olefins mentioned above, olefins based on fatty acids including condensates thereof with various alcohols such as glycerin (drying and semi-drying oils) may be used. Examples of such fatty acids are those rich in linoleic acid. Examples of drying and semi-drying oils are soybean, linseed, tung, perilla, cottonseed, corn, sunflower and safflower oil.

The polyamides that are used in the practice of the invention are condensation products of polyamines and the oligomeric fatty acids. Illustrative of the polyamines are diethylenetriamine, triethylenetetramine, tetraethylenepentamine and those generally illustrated by the formula H(HNR)ₙNH₂ where R is an alkylene radical having from 2 to 6 carbon atoms and n is an integer of 1 to 6.

The oligomeric fatty acids employed are those resulting from the polymerization of drying or semi-drying oils or their free acids, or the simple aliphatic alcohol esters of these acids, particularly from sources rich in linoleic acid. Simple drying or semi-drying oils include soybean, linseed, tung, perilla, cottonseed, corn, sunflower, safflower and dehydrated castor oils. Suitable fatty acids may also be obtained from tall oil, soap stock and other similar materials. In the process for the preparation of the oligomeric fatty acid, the fatty acids with sufficient double bond functionality combine for the most part probably by a Diels-Alder mechanism, to provide a mixture of dibasic and oligomeric fatty acids. These acids are referred to as dimers, trimers and the like. The term "oligiomeric fatty acids" as used herein, is intended to include any individual oligiomeric fatty acid as well as mixtures of oligiomeric fatty acids, the latter usually containing a predominant portion of dimer acids, a small quantity of trimer and higher polymeric fatty acids and some residual monomer. The oligiomeric fatty acids containing predominantly the dimeric form of the acid with some residual monomer and small quantities of trimer and higher polymeric fatty acid, may be hydrogenated if desired and the hydrogenated product employed to form the polyamide. In addition, the polymeric fatty acids may be distilled to provide relatively high dimer content acids.

The polyamine and the oligomeric fatty acid are condensed at elevated temperatures to form the polyamide. Preferably, an excess of polyamine is used to get an amine functional (preferably amine terminated) polyamide in which the amine groups are in the terminal position of the polyamide. By excess is meant the ratio of equivalents of amine to equivalents of carboxyl is greater than 1. The reaction product typically will have an amine number in the range of 50 to 80.

The epoxidized olefin and the polyamide are mixed and heated to 100°C, usually 100 to 225°C, to form a product. The weight ratio of polyamide to epoxidized olefin is preferably 10 to 40:90 to 60. Reaction time varies depending primarily on the temperature but is typically from 30 minutes to 3 hours. The epoxidized polyolefin-polyamide product is present in the composition in amounts of about 5 to 35 percent by weight based on weight of resin solids in the composition.

Optional ingredients can be included in the coating composition. Typically, the coating composition will contain a diluent, such as water, or an organic solvent or a mixture or water and organic solvent to dissolve or disperse the ingredients of the composition. The organic solvent is selected to have sufficient volatility to evaporate essentially entirely from the coating composition during the curing process such as during heating from 175-205°C. for about 5 to 15 minutes. Examples of suitable organic solvents are aliphatic hydrocarbons such as mineral spirits and high flash point VM&P naphtha; aromatic hydrocarbons such as benzene, toluene, xylene and solvent naphtha 100, 150, 200 and the like; alcohols, for example, ethanol, n-propanol, isopropanol, n-butanol and the like; ketones such as acetone, cyclohexanone, methylisobutyl ketone and the like; esters such as ethyl acetate, butyl acetate, and the like; glycols such as butyl glycol, glycol ethers such as methoxypropanol and ethylene glycol monomethyl ether and ethylene glycol monobutyl ether and the like. Mixtures of various organic solvents can also be used. For aqueous compositions, the resinous vehicle typically has acid groups, such as acid functional acrylic polymers, that are at least partially neutralized with an amine to assist in the dispersion or dissolution of the resinous vehicle in the aqueous medium. When present, the diluent is used in the coating compositions in amounts of about 20 to 80, such as 30 to 70 percent by weight based on total weight of the coating composition.

Adjuvant resins such as polyether polyols and polyurethane polyols may be included in the coating compositions to maximize certain properties of the resultant coating. When present, the adjuvant resin is used in amounts of up to 50, typically 2-50 percent by weight based on weight of resin solids of the coating composition.

Another optional ingredient that is typically present in the coating composition is a catalyst to increase the rate of cure or crosslinking of the coating compositions. Generally acid catalyst may be used and is typically present in amounts of about 0.05 to 5 percent by weight. Examples of suitable catalyst are dodecyl benzene sulfonic acid, methane sulfonic acid, paratoluene sulfonic acid, dinonyl naphthalene disulfonic acid and phenyl phosphonic acid.

Another useful optional ingredient is a lubricant, for example, a wax which facilitates manufacture of metal closures by imparting lubricity to the sheets of the coated metal substrate. Preferred lubricants include, for example, carnauba wax and polyethylene-type lubricants. If used, the lubricant is preferably present in the coating compositions of at least 0.1 percent by weight based on weight of resin solids in the coating composition.

Another useful optional ingredient is a pigment such as titanium dioxide. If used, the pigment is present in the coating compositions in amounts no greater than 70 percent by weight, preferably no greater than 40 percent by weight based on total weight of solids in the coating composition.

Surfactants can optionally be added to the coating composition to aid in flow and wetting of the substrate. Examples of suitable surfactants include, but are not limited to, nonyl phenol polyether and salts. If used, the surfactant is present in amounts of at least 0.01 percent and no greater than 10 percent based on weight of resin solids in the coating composition.

In certain embodiments, the compositions used in the practice of the invention are substantially free, may be essentially free and may be completely free of bisphenol A and derivatives or residues thereof, including bisphenol A ("BPA") and bisphenol A diglycidyl ether ("BADGE"). Such compositions are sometimes referred to as "BPA non intent" because BPA, including derivatives or residues thereof, are not intentionally added but may be present in trace amounts because of unavoidable contamination from the environment. The compositions can also be substantially free and may be essentially free and may be completely free of bisphenol F and derivatives or residues thereof, including bisphenol F and bisphenol F diglycidyl ether ("BPFG"). The term "substantially free" as used in this context means the compositions contain less than 1000 parts per million (ppm), "essentially free" means less than 100 ppm and "completely free" means less than 20 parts per billion (ppb) of any of the above-mentioned compounds, derivatives or residues thereof.

The compositions of the present invention can be prepared according to methods well known in the art. For example, using an acid functional acrylic polymer as the resinous vehicle, the polymer is neutralized with an amine to between 20-80 percent of the total theoretical neutralization. The neutralized acrylic polymer is then dispersed in water followed by the epoxidized olefinpolyamide product. The mixture is then thinned with more water to achieve a manageable viscosity. Crosslinkers and additives are then added followed by thinning with additional water to achieve the desired solids and viscosity.

As mentioned above, the coating compositions of the present invention can be applied to containers of all sorts and are particularly well adapted for use on food and beverage cans (e.g., two-piece cans, three-piece cans, etc.).

The compositions can be applied to the food or beverage container by any means known in the art such as roll coating, spraying and electrocoating. It will be appreciated that for two-piece food cans, the coating will typically be sprayed after the can is made. For three-piece food cans, a flat sheet will typically be roll coated with one or more of the present compositions first and then the can will be formed. As noted above, the percent solids of the composition can be adjusted based upon the means of application. The coating can be applied to a dry film weight of 24 mgs/4 in² to 12 mgs/4 in², such as 20 mgs/4 in² to 14 mgs/4 in2.

After application, the coating is then cured. Cure is effected by methods standard in the art. For coil coating, this is typically a short dwell time (i.e., 9 seconds to 2 minutes) at high heat (i.e., 485°F. (252°C) peak metal temperature); coated metal sheets typically cure longer (i.e., 10 minutes) but at lower temperatures (i.e., 400°F (204°C) peak metal temperature). For spray applied coatings on two-piece cans, the cure can be from 5 to 8 minutes, with a 90-second bake at a peak metal temperature of 415°F (213°C) to 425°F (218°C).

Any material used for the formation of food cans can be treated according to the present methods. Particularly suitable substrates include tinplated steel, tin-free steel and black-plated steel.

The coatings of the present invention can be applied directly to the steel, without any pretreatment or adhesive aid being added to the metal first. In addition, no coatings need to be applied over top of the coatings used in the present methods.

The compositions of the present invention perform as desired both in the areas of flexibility and corrosion/acid resistance.

In view of the foregoing the present invention relates thus in particular, though not being limited thereto, to the following aspects:
1. A composition comprising:
   (a) a resinous binder comprising a polyester polymer and a curing agent, which is reactive with the polyester polymer,
   (b) 5 to 35 percent by weight based on total solids weight of the composition of a product formed by mixing together and heating:
      (i) an epoxidized olefin polymer, and
      (ii) a polyamide,
      wherein the polyester polymer is used in an amount of 30 to 90 percent by weight, and the curing agent is used in an amount of 5 to 50 percent by weight, the percentages by weight being based on the weight of total solids in the coating composition.
2. The composition of aspect 1 in which the resinous binder comprises a polymer containing reactive functional groups.
3. The composition of aspect 2 in which the resinous binder comprises a curing agent that has groups that are reactive with the functional groups of the polymer.
4. The composition of aspect 2 in which the polymer is an acrylic polymer.
5. The composition of aspect 3 in which the crosslinking agent comprises an aminoplast or a phenolplast.
6. The composition of aspect 1 in which the epoxidized olefin polymer is epoxidized polybutadiene.
7. The composition of aspect 1 in which the epoxidized olefin polymer is an epoxidized fatty acid or an epoxidized fatty oil.
8. The composition of aspect 6 in which the epoxidized polybutadiene has a number average molecular weight of from 300 to 3000.
9. The composition of aspect 6 in which the epoxidized polybutadiene has an oxirane oxygen content of 5 to 15 percent by weight based on total polymer weight.
10. The composition of aspect 6 in which the epoxidized polybutadiene has a hydroxyl number of 0.5 to 5.0.
11. The composition of aspect 1 in which the polyamide is an amine-terminated polyamide.
12. The composition of aspect 11 in which the polyamide has an amine number of 50 to 800.
13. The composition of aspect 1 in which the epoxidized olefin polymer and the polyamide are heated to a temperature of at least 100°C.
14. The composition of aspect 13 in which the heating is from 100 to 325°C.
15. The composition of aspect 1, which is substantially free of bisphenol A and derivatives thereof.
16. The composition of aspect 1 which is dissolved or dispersed in aqueous medium.
17. The composition of aspect 1 in which the ratio of polyamide to epoxidized olefin polymer is from 10 to 40:90 to 60.
18. A coated article comprising:
   (a) a substrate, and
   (b) a coating deposited on at least a portion of the substrate from the composition of aspect 1.
19. The coated article of aspect 18 in which the substrate is a container.
20. The coated article of aspect 19 in which the container is a food or beverage container.
21. The coated article of aspect 20 in which the coating is on the interior surface of the container.

### EXAMPLES

The following examples are offered to aid in understanding of the present invention and are not to be construed as limiting the scope thereof. Unless otherwise indicated, all parts and percentages are by weight.

The following examples show the preparation of
1. four (4) different products obtained by mixing together and heating an epoxidized polybutadiene and a polyamide;
2. two (2) acrylic resinous binders,
3. the formulation of coating compositions with these materials in combination with phenolplast curing agents.

The coating compositions were applied to can ends, the cans partially filled with aqueous sodium chloride solutions and with a solution of sodium chloride and acetic acid to simulate the conditions associated with acidic food and beverage products such as tomatoes and carbonated beverages. The cans were sealed and steam processed. The can ends were then evaluated for crosshatch adhesion after steam processing.

### Examples A-D

A product was obtained by mixing together and heating to 250°F (121°C) for 90 minutes the following polyamides and epoxidized polybutadienes:

| Example | % by Weight Polyamide^{1,3} | % by Weight Epoxidized Polybutadiene^{2,3} |
|---|---|---|
| A | 50 | 50 |
| B | 66.5 | 33.5 |
| C | 52.7 | 47.3 |
| D | 20 | 80 |

| | | |
|---|---|---|
| ¹ Amine terminated polyamide available from Momentive as EPIKURE 3115. ² Available from Cray Valley as Poly BD 605E. ³ % by weight based on total weight of polyamide and epoxidized polybutadiene. | | |

### Example E

An acrylic resin based on 22 percent by weight methacrylic acid, 50 percent by weight styrene and 28 percent by weight butyl acrylate (based on total weight of monomers) was prepared by free radical polymerization with peroxide initiator at 50 percent by weight solids in a 50/50 by weight mixture of 2-butoxyethanol and butyl alcohol.

### Example F

An acrylic resin similar to Example E was prepared but in which the butyl acrylate was replaced with ethyl acrylate and in which the weight ratio of methacrylic acid/styrene/ethyl acrylate was 29/30/41.

### Example G

Phenolplast 29-108 from Durez.

### Example H

Phenolplast HRJ 1367 from Schenectady.

### Examples 1-7 (not in accordance with the present invention)

Coating compositions were prepared from the following mixture of ingredients. The amounts given are by weight based on total weight of ingredients.

| | Resinous Binder | | Epoxidized Polybutadiene-Polyamide Product | | | | Phenolplast Crosslinking Agent | |
|---|---|---|---|---|---|---|---|---|
| Example | Acrylic E | Acrylic F | Ex. A | Ex. B | Ex. C | Ex. D | Ex. G | Ex. H |
| 1 | 10.71 | 18.38 | 10.95 | - | - | - | 28.39 | 31.57 |
| 2 | 11.27 | 19.33 | - | 17.26 | - | - | 24.4 | 27.74 |
| 3 | 10.7 | 18.3 | - | - | 14.1 | - | 27.1 | 29.8 |
| 4 | 10.52 | 18.03 | - | - | - | 6.03 | 31.1 | 34.32 |
| 5 (control) | 11.4 | 19.59 | - | - | - | - | 32.83 | 36.18 |
| 6 | 10.9 | 18.6 | (epoxidized polybutadiene only 5.4) | | | | 30.7 | 34.4 |
| 7 | 10.9 | 18.6 | (polyamide only 5.6) | | | | 30.6 | 34.3 |

The coating compositions of Examples 1-7 were coated onto both tin plated (ETP) and tin-free steel (TFS) 307 can ends at 18-22 milligrams/4 square inches (25.8 cm²). The coatings were cured by heating at 425°F (218°C) for 5 minutes. The coated can ends (top and bottom) were seamed onto cans containing a 2 percent by weight sodium chloride aqueous solution and cans containing an aqueous solution containing 3 grams of sodium chloride, 2 grams of glacial acetic acid and 95 grams of water. The cans that were at least 90 percent full were steam processed for 90 minutes at 250°F (121°C) and evaluated for crosshatch adhesion according to ASTM standard rating system (0 = no adhesion, 1 = very poor, 2 = poor, 4 = fair, 6 = good, 8 = very good, 9 = excellent and 10 = perfect). The results are reported below.

| | Salt-Acetic Acid Solution | | | | Salt Solution | | | |
|---|---|---|---|---|---|---|---|---|
| Example | TFS Top | TFS Bottom | ETP Top | ETP Bottom | TFS Top | TFS Bottom | ETP Top | ETP Bottom |
| 1 | 7 | 4 | 6.5 | 8 | 10 | 10 | 10 | 6 |
| 2 | 3 | 4 | 8 | 9 | 9 | 10 | 10 | 10 |
| 3 | 5 | 4 | 8 | 8 | 8 | 7 | 9 | 4 |
| 4 | 8 | 8 | 9 | 10 | 9 | 10 | 9 | 10 |
| 5 (control) | 7 | 7 | 9 | 10 | 9 | 8 | 8 | 9 |
| 6 | 7 | 5 | 7 | 9 | 10 | 10 | 10 | 10 |
| 7 | 3 | 4 | 7 | 9 | 10 | 5 | 6 | 5 |

## Claims

1. A composition comprising:
(a) a resinous binder comprising a polyester polymer and a curing agent, which is reactive with the polyester polymer,
(b) 5 to 35 percent by weight based on total solids weight of the composition of a product formed by mixing together and heating:
(i) an epoxidized olefin polymer, and
(ii) a polyamide,
wherein the polyester polymer is used in an amount of 30 to 90 percent by weight, and the curing agent is used in an amount of 5 to 50 percent by weight, the percentages by weight being based on the weight of total solids in the coating composition.

2. The composition of claim 1 in which the resinous binder comprises a polymer containing reactive functional groups.

3. The composition of claim 2 in which the resinous binder comprises a curing agent that has groups that are reactive with the functional groups of the polymer, the crosslinking agent preferably comprising an aminoplast or a phenolplast.

4. The composition of claim 2 in which the polymer is an acrylic polymer.

5. The composition of claim 1 in which the epoxidized olefin polymer is epoxidized polybutadiene.

6. The composition of claim 1 in which the epoxidized olefin polymer is an epoxidized fatty acid or an epoxidized fatty oil.

7. The composition of claim 5 in which the epoxidized polybutadiene has one or more of the following:
- a number average molecular weight of from 300 to 3000,
- an oxirane oxygen content of 5 to 15 percent by weight based on total polymer weight,
- a hydroxyl number of 0.5 to 5.0.

8. The composition of claim 1 in which the polyamide is an amine-terminated polyamide, the polyamide preferably having an amine number of 50 to 800.

9. The composition of claim 1 in which the epoxidized olefin polymer and the polyamide are heated to a temperature of at least 100°C, preferably from 100 to 325°C.

10. The composition of claim 1, which is substantially free of bisphenol A and derivatives thereof.

11. The composition of claim 1 which is dissolved or dispersed in aqueous medium.

12. The composition of claim 1 in which the ratio of polyamide to epoxidized olefin polymer is from 10 to 40:90 to 60.

13. A coated article comprising:
(a) a substrate, and
(b) a coating deposited on at least a portion of the substrate from the composition of claim 1.

14. The coated article of claim 13 in which the substrate is a container.

15. The coated article of claim 14 in which the container is a food or beverage container, wherein the coating is preferably on the interior surface of the container.

## Patentansprüche

1. Eine Zusammensetzung umfassend:
(a) ein harzartiges Bindemittel umfassend ein Polyesterpolymer und ein Vernetzungsmittel, das gegenüber dem Polyesterpolymer reaktiv ist,
(b) 5 bis 35 Gew.-%, basierend auf dem Gesamtfeststoffgewicht der Zusammensetzung, eines Produkts, gebildet durch Vermischen und Erhitzen von:
(i) einem epoxidierten Olefinpolymer und
(ii) einem Polyamid,
wobei das Polyesterpolymer in einer Menge von 30 bis 90 Gew.-% verwendet wird und das Vernetzungsmittel in einer Menge von 5 bis 50 Gew.-% verwendet wird, wobei die Gewichtsprozentangaben auf dem Gesamtgewicht an Feststoffen in der Beschichtungszusammensetzung basieren.

2. Die Zusammensetzung gemäß Anspruch 1, in welcher das harzartige Bindemittel ein Polymer mit reaktiven funktionellen Gruppen umfasst.

3. Die Zusammensetzung gemäß Anspruch 2, in welcher das harzartige Bindemittel ein Vernetzungsmittel umfasst, das Gruppen aufweist, die gegenüber den funktionellen Gruppen des Polymers reaktiv sind, wobei das Vernetzungsmittel vorzugsweise einen Aminoplasten oder einen Phenolplasten umfasst.

4. Die Zusammensetzung gemäß Anspruch 2, in welcher das Polymer ein Acrylpolymer ist.

5. Die Zusammensetzung gemäß Anspruch 1, in welcher das epoxidierte Olefinpolymer ein epoxidiertes Polybutadien ist.

6. Die Zusammensetzung gemäß Anspruch 1, in welcher das epoxidierte Olefinpolymer eine epoxidierte Fettsäure oder ein epoxidiertes Fettöl ist.

7. Die Zusammensetzung gemäß Anspruch 5, in welcher das epoxidierte Polybutadien ein oder mehrere der Folgenden aufweist:
- ein zahlenmittleres Molekulargewicht von 300 bis 3000,
- einen Oxiransauerstoffgehalt von 5 bis 15 Gew.-%, basierend auf dem Gesamtpolymergewicht,
- eine Hydroxylzahl von 0,5 bis 5,0.

8. Die Zusammensetzung gemäß Anspruch 1, in welcher das Polyamid ein aminterminiertes Polyamid ist, wobei das Polyamid vorzugsweise eine Aminzahl von 50 bis 800 aufweist.

9. Die Zusammensetzung gemäß Anspruch 1, in welcher das epoxidierte Olefinpolymer und das Polyamid auf eine Temperatur von wenigstens 100 °C, vorzugsweise von 100 bis 325 °C, erhitzt werden.

10. Die Zusammensetzung gemäß Anspruch 1, die im Wesentlichen frei von Bisphenol-A und Derivaten davon ist.

11. Die Zusammensetzung gemäß Anspruch 1, die in einem wässrigen Medium gelöst oder dispergiert ist.

12. Die Zusammensetzung gemäß Anspruch 1, in der das Verhältnis von Polyamid zu epoxidiertem Olefinpolymer von 10 bis 40 : 90 bis 60 ist.

13. Ein beschichteter Gegenstand umfassend:
(a) ein Substrat und
(b) eine Beschichtung, die auf wenigstens einem Teil des Substrats unter Verwendung der Zusammensetzung gemäß Anspruch 1 abgeschieden ist.

14. Der beschichtete Artikel des Anspruchs 13, in welchem das Substrat ein Behälter ist.

15. Der beschichtete Artikel des Anspruchs 14, in welchem der Behälter ein Lebensmittel- oder Getränkebehälter ist, wobei sich die Beschichtung vorzugsweise auf der inneren Oberfläche des Behälters befindet.

## Revendications

1. Composition comprenant
a) un liant résineux comprenant un polymère polyester et un agent durcisseur qui est réactif vis-à-vis du polymère polyester,
b) et de 5 à 35 %, en poids rapporté au poids total de matières solides de la composition, d'un produit formé par mélangeage et chauffage
i) d'un polymère d'oléfine époxydé
ii) et d'un polyamide,
et dans laquelle le polymère polyester est utilisé en une proportion de 30 à 90 % en poids et l'agent durcisseur est utilisé en une proportion de 5 à 50 % en poids, ces pourcentages pondéraux étant rapportés au poids total de matières solides de la composition de revêtement.

2. Composition conforme à la revendication 1, dans laquelle le liant résineux comprend un polymère comportant des groupes fonctionnels réactifs.

3. Composition conforme à la revendication 2, dans laquelle le liant résineux comprend un agent de réticulation comportant des groupes qui peuvent réagir avec les groupes fonctionnels du polymère, cet agent de réticulation comprenant de préférence un aminoplaste ou un phénoplaste.

4. Composition conforme à la revendication 2, dans laquelle le polymère est un polymère polyacrylique.

5. Composition conforme à la revendication 1, dans laquelle le polymère d'oléfine époxydé est un polybutadiène époxydé.

6. Composition conforme à la revendication 1, dans laquelle le polymère d'oléfine époxydé est un acide gras époxydé ou une huile grasse époxydée.

7. Composition conforme à la revendication 5, dans laquelle le polybutadiène époxydé présente l'une ou plusieurs des caractéristiques suivantes :
- une masse molaire moyenne en nombre valant de 300 à 3000,
- une teneur en oxygène de cycle oxirane valant de 5 à 15 %, en poids rapporté au poids total du polymère,
- un indice d'hydroxyle valant de 0,5 à 5,0.

8. Composition conforme à la revendication 1, dans laquelle le polyamide est un polyamide à terminaisons de type amine, lequel polyamide, de préférence, présente un indice d'amine valant de 50 à 800.

9. Composition conforme à la revendication 1, pour laquelle le polymère d'oléfine époxydé et le polyamide sont chauffés à une température valant au moins 100 °C, et de préférence, de 100 à 325 °C.

10. Composition conforme à la revendication 1, qui ne contient pratiquement pas de bisphénol A ou de ses dérivés.

11. Composition conforme à la revendication 1, qui est dissoute ou dispersée dans un milieu aqueux.

12. Composition conforme à la revendication 1, dans laquelle le rapport du polyamide au polymère d'oléfine époxydé vaut de 10/90 à 40/60.

13. Article revêtu comprenant :
a) un substrat,
b) et un revêtement déposé sur au moins une partie du substrat, et obtenu à partir d'une composition conforme à la revendication 1.

14. Article revêtu conforme à la revendication 13, dans lequel le substrat est un contenant.

15. Article revêtu conforme à la revendication 14, dans lequel le contenant est un contenant pour aliment ou boisson, et dans lequel, de préférence, le revêtement se trouve sur la surface interne du contenant.
